# EUROPEAN PATENT APPLICATION

(11) **EP 4 496 375 A1**
(43) Date of publication of application: **22.01.2025**
(21) Application number: 23787789.9
(22) Date of filing: 13.04.2023
(51) Int. Cl.: H04W 24/08

(54) **METHOD FOR DETERMINING DETECTION QUANTITY, TERMINAL, AND STORAGE MEDIUM**

(30) Priority: 15.04.2022 CN 202210399658
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: YANG, Tuo, Beijing 100032 (CN)
(74) Representative: Hertin und Partner Rechts- und Patentanwälte PartG mbB
(86) International application number: PCT/CN2023/088047
(87) International publication number: WO 2023/198147

(57) **Abstract**

A method for determining a number of monitoring, a terminal, and a storage medium are provided, the method includes: according to a predefined rule or indication information of a network side, for a first cell or multiple cells, counting a number of monitored physical downlink control channel (PDCCH) candidates and/or a number of non-overlapping control channel elements (CCEs) carrying first downlink control information (DCI); where the first DCI is configured to schedule a physical downlink shared channel (PDSCH) and/or physical uplink shared channel (PUSCH) in the multiple cells.

## Description

### CROSS REFERENCE OF RELATED APPLICATION

The present disclosure claims a priority of Chinese patent disclosure No. 202210399658.9 filed on April 15, 2022, which are incorporated herein by reference in its entirety.

### TECHNICAL FIELD

The present disclosure relates to the field of wireless interface physical layer design, and in particular to a method for determining a number of monitoring, a terminal, and a storage medium.

### BACKGROUND

In the fifth generation mobile communication technology (5G) new radio (NR), in order to reduce the signaling overhead of the physical downlink control channel (PDCCH), a new scheduling downlink control information (DCI) is introduced that can schedule the uplink and/or downlink channels of multiple cells. If the DCI is counted into the number of blind detection PDCCH candidates and the number of non-overlapping control channel elements (CCE) of all scheduled cells, the number of PDCCH candidates and the number of non-overlapping CCEs actually monitored by the terminal are inconsistent with the counted number of blind detection PDCCH candidates and the number of non-overlapping CCEs of all scheduled cells, resulting in a waste of part of the PDCCH detection capability.

### SUMMARY

The embodiments of the present disclosure provide a method for determining the number of monitoring, a terminal, and a storage medium, which can improve the utilization rate of PDCCH and/or CCE detection capabilities.

The present disclosure is achieved as follows:
In a first aspect, a method for determining a number of monitoring is provided in the embodiment of the present disclosure, including:
according to a predefined rule or indication information of a network side, for a first cell or multiple cells, counting a number of monitored physical downlink control channel (PDCCH) candidates and/or a number of non-overlapping control channel elements (CCEs) carrying first downlink control information (DCI); where the first DCI is configured to schedule physical downlink shared channel (PDSCH) and/or physical uplink shared channel (PUSCH) in the multiple cells.

The above method for determining a number of monitoring further includes:
determining the first cell according to the predefined rule; where the first cell is a cell where the terminal detects the first DCI.

The above method for determining a number of monitoring further includes:
determining the first cell according to the indication information of the network side.

The above method for determining a number of monitoring further includes:
for a second cell, not counting the number of monitored PDCCH candidates and/or a number of non-overlapping CCEs carrying the first DCI, and the second cell is a cell among the multiple cells excepting the first cell.

In the above method for determining a number of monitoring, the counting according to the predefined rule or indication information of the network side, the number of monitored PDCCH candidates and/or the number of non-overlapping CCEs carrying the first DCI for the first cell or the multiple cells includes:
according to the predefined rule, for the multiple cells, counting the number of monitored PDCCH candidates and/or the number of non-overlapping CCEs carrying the first DCI.

In the above method for determining a number of monitoring, the counting, according to the predefined rule, the number of monitored PDCCH candidates and/or the number of non-overlapping CCEs carrying the first DCI for the multiple cells includes:
for each of the multiple cells, multiplying the monitored number of monitored PDCCH candidates and/or the number of non-overlapping CCEs carrying the first DCI by a first factor, and counting the result into the number of monitored PDCCH candidates and/or the number of non-overlapping CCEs carrying the first DCI corresponding to each of the multiple cells.

In the above method for determining a number of monitoring, the first factor is a parameter related to N or 1/N; where N is a number of cells scheduled by the first DCI or a number of cells configured for the first DCI to schedule.

The above method for determining a number of monitoring further includes:
for a primary cell among the multiple cells,
if the number of monitored PDCCH candidates and the number of non-overlapping CCEs in a first search space multiplied by the first factor is less than or equal to the number of monitored PDCCH candidates and the number of non-overlapping CCEs remained in the primary cell, monitoring the first search space;
if the number of monitored PDCCH candidates and the number of non-overlapping CCEs in the first search space multiplied by the first factor is greater than the number of monitored PDCCH candidates and the number of non-overlapping CCEs remained in the primary cell, not monitoring the first search space or other search space with an index larger than an index of the first search space; where the first search space is a search space configured with the first DCI.

In a second aspect, a terminal is provided in the embodiment, including:
a counting unit, configured to, according to a predefined rule or indication information of a network side, for a first cell or multiple cells, count a number of monitored physical downlink control channel (PDCCH) candidates and/or a number of non-overlapping control channel elements (CCEs) carrying first downlink control information (DCI); where the first DCI is configured to schedule a physical downlink shared channel (PDSCH) and/or physical uplink shared channel (PUSCH) in the multiple cells.

In a third aspect, a terminal is provided in the embodiment, including: a processor, a memory and a communication bus; where the processor is configured to execute a running program stored in the memory to perform the above method for determining a number of monitoring.

In a fourth aspect, a storage medium is provided in the embodiment, storing a computer program, where the computer program is executed by a processor to perform the above method for determining a number of monitoring.

The disclosed embodiments provide a method for determining the number of monitoring, a terminal, and a storage medium, the method includes: according to a predefined rule or indication information of a network side, for a first cell or multiple cells, counting a number of monitored PDCCH candidates and/or a number of non-overlapping CCEs carrying first DCI; wherein the first DCI is configured to schedule a PDSCH and/or PUSCH in the multiple cells. According to the above-mentioned implementation scheme, for DCI that can schedule multiple cells, the number of PDCCH candidates and the number of non-overlapping CCEs for monitoring the DCI do not need to be repeatedly counted for all DCI-scheduled cells, but can be selected to be counted for the first cell or multiple cells, thereby avoiding a waste of PDCCH detection capability, and increasing the scheduling flexibility of the base station within the capability of the existing terminal to monitor PDCCH.

### BRIEF DESCRIPTION OF THE DRAWINGS

Fig.1 is a flow chart of a method for determining the number of monitoring in an embodiment of the present disclosure;
Fig.2 is a flow chart of an exemplary detection method in an embodiment of the present disclosure;
Fig.3 is a first schematic view of a structure of a terminal provided in an embodiment of the present disclosure; and
Fig. 4 is a second schematic view of a structure of a terminal provided in an embodiment of the present disclosure.

### DETAILED DESCRIPTION

It should be understood that the specific embodiments described herein are only used to explain the present disclosure and are not used to limit the present disclosure.

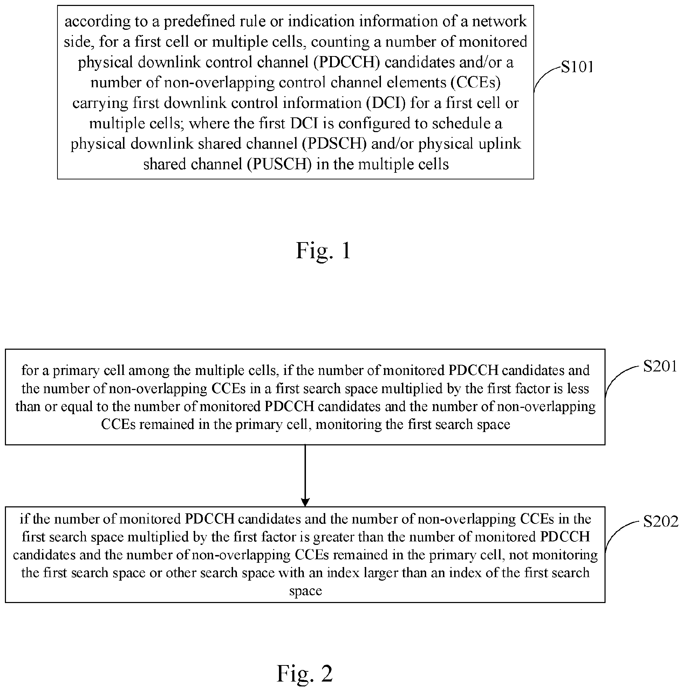

The present disclosure provides a method for determining the number of monitoring, which is applied to a terminal. Fig.1 is a flow chart of a method for determining the number of monitoring provided by the present disclosure. As shown in Fig.1, the method for determining the number of monitoring may include:
S101: according to a predefined rule or indication information of a network side, for a first cell or multiple cells, counting a number of monitored physical downlink control channel (PDCCH) candidates and/or a number of non-overlapping control channel elements (CCEs) carrying first downlink control information (DCI) for a first cell or multiple cells; where the first DCI is configured to schedule a physical downlink shared channel (PDSCH) and/or physical uplink shared channel (PUSCH) in the multiple cells.

In an embodiment of the present disclosure, the terminal counts the number of monitored physical downlink control channel (PDCCH) candidates and/or the number of non-overlapping control channel elements (CCEs) carrying first downlink control information (DCI) for a first cell or multiple cells according to predefined rules or indication information on the network side; the first DCI is configured to schedule physical downlink shared channels (Physical Downlink Shared CHannel, PDSCH) and/or physical uplink shared channels (Physical Uplink Shared CHannel, PUSCH) of multiple cells.

The method for determining the number of monitoring provided in the present disclosure is applicable to a scenario in which a terminal performs PDCCH monitoring on a cell.

In an embodiment of the present disclosure, the terminal determines the first cell according to a predefined rule or determines the first cell according to indication information on the network side; where the first cell is a cell that detects the first DCI among multiple cells corresponding to the terminal.

It should be noted that, in the embodiment of the present disclosure, the indication information on the network side is high-level signaling, and the specific indication information can be determined according to actual conditions, and the embodiment of the present disclosure does not make any specific limitation here.

In an embodiment of the present disclosure, after the terminal determines the first cell from multiple cells, it counts the number of monitored PDCCH candidates and/or the number of non-overlapping CCEs carrying the first DCI for the first cell, and does not count the number of monitored PDCCH candidates and/or the number of non-overlapping CCEs carrying the first DCI for the second cell other than the first cell among the multiple cells.

It can be understood that NR specifies the maximum number of PDCCH blind detection and/or the maximum number of non-overlapping CCEs corresponding to the cell in each time slot. Although the first DCI schedules multiple cells, by only counting the number of monitored PDCCH candidates and/or the number of non-overlapping CCEs carrying the first DCI for the first cell among the multiple cells, the remaining number of monitored PDCCH candidates and/or the number of non-overlapping CCEs in the second cell can be used for the transmission of other PDCCHs, thereby increasing the scheduling flexibility on the network side without increasing the detection capability of the terminal. Otherwise, according to the related art, it is necessary to count the number of monitored PDCCH candidates and/or the number of non-overlapping CCEs carrying the first DCI on multiple cells respectively, while the terminal actually detects the first DCI only on one cell, which will cause unnecessary waste of the number of monitored PDCCH candidates and/or the number of non-overlapping CCEs.

Based on the above method, the present disclosure provides an optional embodiment, in which the first DCI is configured to schedule three cells of the terminal, namely, cell 1, cell 2 and cell 3. The terminal uses cell 1 as the first cell according to predefined rules or indication information on the network side. The terminal detects the first DCI. If the number of monitored PDCCHs and/or the number of non-overlapping CCEs by the terminal is 10, then the 10 is counted into the number of monitored PDCCH candidates and/or the number of non-overlapping CCEs in cell 1, but not into cell 2 and cell 3.

It can be understood that, for cell 2 and cell 3, the remaining PDCC Hs and/or non-overlapping CCE quantities can be used for transmission of other PDCCHs, thereby increasing scheduling flexibility on the network side without increasing the detection capability of the terminal.

In an embodiment of the present disclosure, the terminal counts the number of monitored PDCCH candidates and/or the number of non-overlapping CCEs carrying the first DCI for multiple cells according to predefined rules. Specifically: for each cell in the multiple cells, the number of monitored PDCCH candidates and/or the number of non-overlapping control channel elements (CCEs) carrying the first DCI is multiplied by a first factor, and then counted into the number of monitored PDCCH candidates and/or the number of non-overlapping CCEs carrying the first DCI and corresponding to each cell.

In an embodiment of the present disclosure, the first factor is a parameter related to N or 1/N; where N is the number of cells of the first DCI scheduling cell or the number of cells configured with the first DCI scheduling; exemplarily, the first factor is 1 /N, if the number of cells of the first DCI scheduling cell is 5, at this time, the terminal detects the first DCI, if the number of PDCCHs and/or the number of non-overlapping CCEs monitored by the terminal is 10, then the terminal multiplies 10 by 1/5, which is 2, and counts the number of PDCCHs and/or the number of non-overlapping CCEs into the number of monitored PDCCH candidates and/or the number of non-overlapping CCEs in each cell of the multiple cells; the specific first factor can be determined according to actual conditions, and the present disclosure does not make specific limitations here.

In the embodiment of the present disclosure, Fig. 2 is a flow chart of an exemplary detection method provided by the present disclosure. As shown in Fig. 2,

S201: for a primary cell among the multiple cells, if the number of monitored PDCCH candidates and the number of non-overlapping CCEs in a first search space multiplied by the first factor is less than or equal to the number of monitored PDCCH candidates and the number of non-overlapping CCEs remained in the primary cell, monitoring the first search space.

It should be noted that the primary cell is a cell randomly accessed by the terminal among multiple cells. The primary cell can be a primary cell (PCell) or a primary secondary cell (PSCell), and the number of remained monitored PDCCH candidates and the number of non-overlapping CCEs corresponding to each cell in the multiple cells may be the same or different.

S202: if the number of monitored PDCCH candidates and the number of non-overlapping CCEs in the first search space multiplied by the first factor is greater than the number of monitored PDCCH candidates and the number of non-overlapping CCEs remained in the primary cell, not monitoring the first search space or other search space with an index larger than an index of the first search space; where the first search space is a search space configured with the first DCI.

It should be noted that the first search space is a search space configured with the first DCI.

Based on the above method, the present disclosure provides another embodiment, in which the first DCI is configured to schedule two cells of the terminal, that is, cell 1 and cell 2, where cell 1 is the primary cell, and the terminal detects the first DCI. If the number of monitored PDCCH candidates in the search space configured with the first DCI and the number of non-overlapping CCEs are 10, and the number of remained monitored PDCCH candidates and/or the number of non-overlapping CCEs in the primary cell is 6, 10 multiplied by 1/2 is equal to 5, which is less than 6, then the terminal can detect the search space configured with the first DCI in the primary cell. If the number of remained monitored PDCCH candidates and/or the number of non-overlapping CCEs in the primary cell is 4, and 4 is less than 5, then the terminal cannot detect the search space configured with the first DCI in the primary cell.

The disclosed embodiments provide a method for determining the number of monitoring, a terminal, and a storage medium, the method includes: according to a predefined rule or indication information of a network side, for a first cell or multiple cells, counting a number of monitored PDCCH candidates and/or a number of non-overlapping CCEs carrying first DCI; wherein the first DCI is configured to schedule a PDSCH and/or PUSCH in the multiple cells. According to the above-mentioned implementation scheme, for DCI that can schedule multiple cells, the number of PDCCH candidates and the number of non-overlapping CCEs for detecting the DCI do not need to be repeatedly counted for all DCI-scheduled cells, but can be selected to be counted for the first cell or multiple cells, thereby avoiding a waste of PDCCH detection capability, and increasing the scheduling flexibility of the base station within the capability of the existing terminal to detect PDCCH.

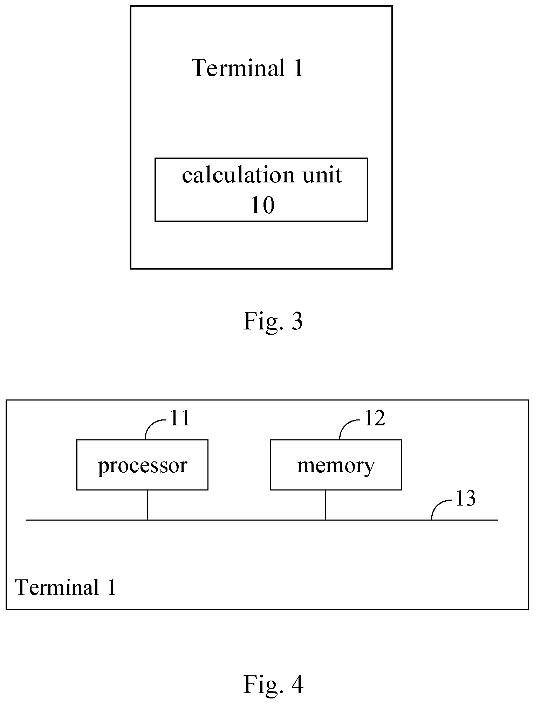

Based on the above embodiment, in another embodiment of the present disclosure, a terminal 1 is provided. Fig.3 is a schematic view of a structure of a terminal provided by the present disclosure. As shown in Fig.3, the terminal 1 includes:
a counting unit 10, configured to, according to a predefined rule or indication information of a network side, for a first cell or multiple cells, count a number of monitored physical downlink control channel (PDCCH) candidates and/or a number of non-overlapping control channel elements (CCEs) carrying first downlink control information (DCI); where the first DCI is configured to schedule a physical downlink shared channel (PDSCH) and/or physical uplink shared channel (PUSCH) in the multiple cells.

Optionally, the terminal 1 further includes: a determining module, configured to:
determine the first cell according to the predefined rule; where the first cell is a cell where the terminal detects the first DCI.

Optionally, the determining module is further configured to determine the first cell according to the indication information of the network side.

Optionally, the counting unit 10 is further configured to:
for a second cell, not count the number of monitored PDCCH candidates and/or a number of non-overlapping CCEs carrying the first DCI, and the second cell is a cell among the multiple cells excepting the first cell.

Optionally, the counting unit 10 is further configured to: according to the predefined rule, for the multiple cells, count the number of monitored PDCCH candidates and/or the number of non-overlapping CCEs carrying the first DCI.

Optionally, the counting unit 10 is further configured to: for each of the multiple cells, multiply the number of monitored PDCCH candidates and/or the number of non-overlapping CCEs carrying the first DCI by a first factor, and count the result into the number of monitored PDCCH candidates and/or the number of non-overlapping CCEs carrying the first DCI corresponding to each of the multiple cells.

Optionally, the first factor is a parameter related to N or 1/N; where N is a number of cells scheduled by the first DCI or a number of cells configured for the first DCI to schedule.

Optionally, the terminal 1 further includes: a detecting module, configured to:
for a primary cell among the multiple cells,
if the number of monitored PDCCH candidates and the number of non-overlapping CCEs in a first search space multiplied by the first factor is less than or equal to the number of monitored PDCCH candidates and the number of non-overlapping CCEs remained in the primary cell, monitor the first search space; if the number of monitored PDCCH candidates and the number of non-overlapping CCEs in the first search space multiplied by the first factor is greater than the number of monitored PDCCH candidates and the number of non-overlapping CCEs remained in the primary cell, not monitor the first search space or other search space with an index larger than an index of the first search space; where the first search space is a search space configured with the first DCI; where the primary cell is cell among the multiple cells.

An embodiment of the present disclosure provides a terminal, which includes: a counting unit, configured to, according to a predefined rule or indication information of a network side, for a first cell or multiple cells, count a number of monitored physical downlink control channel (PDCCH) candidates and/or a number of non-overlapping control channel elements (CCEs) carrying first downlink control information (DCI); where the first DCI is configured to schedule a physical downlink shared channel (PDSCH) and/or physical uplink shared channel (PUSCH) in the multiple cells. According to the above-mentioned implementation scheme, for DCI that can schedule multiple cells, the number of PDCCH candidates and the number of non-overlapping CCEs for monitoring the DCI do not need to be repeatedly counted for all DCI-scheduled cells, and can be selected to be counted for the first cell or multiple cells, thereby increasing the scheduling flexibility of the base station within the capability of existing terminals to detect PDCCH.

Fig.4 is a second schematic view of the composition structure of a terminal provided in an embodiment of the present disclosure. In actual applications, based on the same public concept of the above embodiments, as shown in Fig.4, the terminal 1 of the present embodiment further includes: a processor 11, a memory 12 and a communication bus 13.

In the process of a specific embodiment, the counting unit 10, the determination unit and the detection unit may be implemented by a processor 11 located on the terminal 1, and the processor 11 may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a CPU, a controller, a microcontroller, and a microprocessor. It can be understood that for different terminals, the electronic device used to implement the above-mentioned processor function may also be other, which is not specifically limited in this embodiment.

In the embodiment of the present disclosure, the communication bus 13 is used to realize the connection and communication between the processor 11 and the memory 12; when the processor 11 executes the running program stored in the memory 12, the following method for determining the number of monitoring is implemented:
according to a predefined rule or indication information of a network side, for a first cell or multiple cells, counting a number of monitored physical downlink control channel (PDCCH) candidates and/or a number of non-overlapping control channel elements (CCEs) carrying first downlink control information (DCI); where the first DCI is configured to schedule a physical downlink shared channel (PDSCH) and/or physical uplink shared channel (PUSCH) in the multiple cells.

The processor 11 executes the running program stored in the memory 12 to perform:
determining the first cell according to the predefined rule; where the first cell is a cell where the terminal detects the first DCI.

The processor 11 executes the running program stored in the memory 12 to perform:
determining the first cell according to the indication information of the network side.

The processor 11 executes the running program stored in the memory 12 to perform:
for a second cell, not counting the number of monitored PDCCH candidates and/or a number of non-overlapping CCEs carrying the first DCI, and the second cell is a cell among the multiple cells excepting the first cell.

The processor 11 executes the running program stored in the memory 12 to perform:
according to the predefined rule, for the multiple cells, count the number of monitored PDCCH candidates and/or the number of non-overlapping CCEs carrying the first DCI.

The processor 11 executes the running program stored in the memory 12 to perform:
for each of the multiple cells, multiplying the number of monitored PDCCH candidates and/or the number of non-overlapping CCEs carrying the first DCI by a first factor, and counting the result into the number of monitored PDCCH candidates and/or the number of non-overlapping CCEs carrying the first DCI corresponding to each of the multiple cells.

The processor 11 executes the running program stored in the memory 12 to perform:
for a primary cell among the multiple cells,
if the number of monitored PDCCH candidates and the number of non-overlapping CCEs in a first search space multiplied by the first factor is less than or equal to the number of monitored PDCCH candidates and the number of non-overlapping CCEs remained in the primary cell, monitoring the first search space;
if the number of monitored PDCCH candidates and the number of non-overlapping CCEs in the first search space multiplied by the first factor is greater than the number of monitored PDCCH candidates and the number of non-overlapping CCEs remained in the primary cell, not monitoring the first search space or other search space with an index larger than an index of the first search space; where the first search space is a search space configured with the first DCI.

An embodiment of the present disclosure provides a storage medium having a computer program stored thereon. The computer-readable storage medium stores one or more programs. The one or more programs can be executed by one or more processors and applied in a terminal. The computer program implements the method for determining the number of monitoring as described above.

It should be noted that, in this article, the terms "include", "includes" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation methods, those skilled in the art can clearly understand that the above-mentioned embodiment method can be implemented by means of software plus a necessary general hardware platform, and of course it can also be implemented by hardware, but in many cases the former is a better implementation method. Based on such an understanding, the technical solution of the present disclosure, or the part that contributes to the relevant technology, can be embodied in the form of a software product, which is stored in a storage medium (such as ROM/RAM, disk, optical disk), and includes a number of instructions for enabling an image display device (which can be a mobile phone, computer, server, air conditioner, or network device, etc.) to execute the method for determining the number of monitoring described in each embodiment of the present disclosure.

The above description is only a preferred embodiment of the present disclosure and is not intended to limit the protection scope of the present disclosure.

## Claims

1. A method for determining a number of monitoring, applied to a terminal, comprising:
according to a predefined rule or indication information of a network side, for a first cell or multiple cells, counting a number of monitored physical downlink control channel (PDCCH) candidates and/or a number of non-overlapping control channel elements (CCEs) carrying first downlink control information (DCI), the first DCI scheduling physical downlink shared channel (PDSCH) and/or physical uplink shared channel (PUSCH) in the multiple cells.

2. The method according to claim 1, further comprising:
determining the first cell according to the predefined rule; wherein the first cell is a cell where the terminal detects the first DCI.

3. The method according to claim 1, further comprising:
determining the first cell according to the indication information of the network side.

4. The method according to claim 2 or 3, further comprising:
for a second cell, not counting the number of monitored PDCCH candidates and/or a number of non-overlapping CCEs carrying the first DCI, and the second cell is a cell among the multiple cells excepting the first cell.

5. The method according to claim 1, wherein the counting according to the predefined rule or indication information of the network side, the number of monitored PDCCH candidates and/or the number of non-overlapping CCEs carrying the first DCI for the first cell or the multiple cells comprises:
according to the predefined rule, for the multiple cells, counting the number of monitored PDCCH candidates and/or the number of non-overlapping CCEs carrying the first DCI.

6. The method according to claim 5, wherein the counting, according to the predefined rule, the number of monitored PDCCH candidates and/or the number of non-overlapping CCEs carrying the first DCI for the multiple cells comprises:
for each of the multiple cells, multiplying the number of monitored PDCCH candidates and/or the number of non-overlapping CCEs carrying the first DCI by a first factor, and counting the result into the number of monitored PDCCH candidates and/or the number of non-overlapping CCEs carrying the first DCI corresponding to each of the multiple cells.

7. The method according to claim 6, wherein the first factor is a parameter related to N or 1/N; wherein N is a number of cells scheduled by the first DCI or a number of cells configured for the first DCI to schedule.

8. The method according to claim 6, further comprising:
for a primary cell among the multiple cells,
if the number of monitored PDCCH candidates and the number of non-overlapping CCEs in a first search space multiplied by the first factor is less than or equal to the number of monitored PDCCH candidates and the number of non-overlapping CCEs remained in the primary cell, monitoring the first search space;
if the number of monitored PDCCH candidates and the number of non-overlapping CCEs in the first search space multiplied by the first factor is greater than the number of monitored PDCCH candidates and the number of non-overlapping CCEs remained in the primary cell, not monitoring the first search space or other search space with an index larger than an index of the first search space; wherein the first search space is a search space configured with the first DCI.

9. A terminal, comprising:
a counting unit, configured to, according to a predefined rule or indication information of a network side, for a first cell or multiple cells, count a number of monitored physical downlink control channel (PDCCH) candidates and/or a number of non-overlapping control channel elements (CCEs) carrying first downlink control information (DCI), the first DCI scheduling physical downlink shared channel (PDSCH) and/or physical uplink shared channel (PUSCH) in the multiple cells.

10. A terminal, comprising: a processor, a memory and a communication bus; wherein the processor is configured to execute a running program stored in the memory to perform the method according to any one of claims 1 to 8.

11. A storage medium, storing a computer program, wherein the computer program is executed by a processor to perform the method according to any one of claims 1 to 8.
